# EUROPÄISCHE PATENTSCHRIFT

(11) **EP 0 454 183 B1**
(45) Veröffentlichungstag und Bekanntmachung des Hinweises auf die Patenterteilung: **18.12.1996**
(21) Anmeldenummer: 91111030.2
(22) Anmeldetag: 15.04.1985
(51) Int. Cl.: H02K 29/08

(54) **Rotatorischer Elektromotor**
Rotary electric motor
Moteur électrique rotatif

(30) Priorität: 16.04.1984 DE 3414312
(43) Veröffentlichungstag der Anmeldung: 30.10.1991
(62) Teilanmeldung aus: 85104550.0
(73) Patentinhaber: Magnet-Motor Gesellschaft für magnetmotorische Technik mbH, D-82319 Starnberg (DE)
(72) Erfinder: Heidelberg, Götz, W-8130 Starnberg-Percha (DE); Gründl, Andreas, Dr., W-8000 München 70 (DE)
(74) Vertreter: Klunker . Schmitt-Nilson . Hirsch

(56) Entgegenhaltungen:
- EP-A- 0 094 978
- DE-B- 2 333 252

## Beschreibung

Gegenstand der Erfindung ist ein rotatorischer Elektromotor, mit:
(a) einem Statorpole aufweisenden Stator und einem Läuferpole aufweisenden Läufer, wobei für die Statorpole oder für die Läuferpole Dauermagnete und für die jeweils anderen Pole Elektromagnete vorgesehen sind;
(b) elektronischen Schalteinrichtungen zum Schalten von Elektromagneten jeweils entsprechend der Elektromagnet-Dauermagnet-Relativstellung;
(c) und einer Anordnung der Dauermagnete und der Elektromagnete derart, daß jeweils nur ein Teil der Elektromagnete des Elektromotors gleichzeitig zu schalten ist, dadurch gekennzeichnet,
(d) daß jeweils mehrere benachbarte Elektromagnetpole eine zu einer Phase gehörende Elektromagnetpolgruppe bilden, die mit einer gegenüberliegenden Dauermagnetanzahl zusammenwirkt;
(e) daß benachbarte Elektromagnetpolgruppen unterschiedlichen Phasen angehören;
(f) und daß die Elektromagnetpolgruppen jeweils eine ungerade Anzahl von Elektromagnetpolen aufweisen, wobei die Rand-Elektromagnetpole unbewickelt sind und bewickelte und unbewickelte Elektromagnetpoie miteinander abwechseln.

Dabei handelt es sich um einen normalerweise mit Gleichstrom zu speisenden Elektromotor.

Bevorzugte Ausgestaltungen des Elektromotors sind den Ansprüchen 2 bis 10 zu entnehmen.

Auf einer Reihe von Anwendungsgebieten treten elektronisch gesteuerte Elektromotoren immer stärker in den Vordergrund. Hierbei handelt es sich um Elektromotoren, bei denen das erforderliche, periodische Schalten von Elektromagneten nicht mehr durch einen Kommutator, sondern durch elektronische Schalteinrichtungen vorgenommen wird. Zu den electronischen Schalteinrichtungen gehören geeignete Sensoren, die feststellen, wann der Stator und der Läufer für den gerade zu schaltenden Elektromagneten oder die gerade zu schaltenden Elektromagneten sich in einer schaltungsgünstigen bzw. schaltungserfordernden Relativstellung befinden. Es versteht sich, daß die elektronischen Schalteinrichtungen auch dafür sorgen müssen, daß die Stromzuführung zu dem bzw, den jeweiligen Elektromagneten in der gerade passenden Stromrichtung erfolgt.

Man kennt auch bereits elektronisch gesteuerte Elektromotoren, bei denen entweder für die Statorpole oder für die Läuferpole Dauermagnete eingesetzt worden sind. Dauermagnete bieten hierbei einer Reihe von Vorteilen, von denen Fehlen von Stromverbrauch, geringe Abmessungen und einfache Herstellung und Montage gesondert hervorgehoben werden sollen.

Es ist ferner bereits erkannt worden, daß es häufig ungünstig ist, wenn sämtliche Elektromagnete des Elektromotors gleichzeitig geschaltet werden müssen. Zu einer derartigen Situation der Notwendigkeit des gleichzeitigen Schaltens sämtlicher Elektromagnete des Elektromotors kommt es insbesondere, wenn der gegenseitige Abstand der Elektromagnetpole und der gegenseitige Abstand der Dauermagnetpole überall gleich ist. Als Folge des gleichzeitigen Schaltens sämtlicher beteiligten Elektromagnete ergibt sich ein vergleichsweise unregelmäßiger Motorlauf, eine stoßförmige Netzbelastung und Schwierigkeiten beim Motoranlauf. Eine mögliche Abhilfe besteht darin, die Statorpole oder die Läuferpole nicht rechtwinklig zur Relativbewegungsrichtung von Statorpolen und Läuferpolen verlaufend anzuordnen, sondern leicht abweichend von der Rechtwinkligkeit. Dies kompliziert jedoch den Motoraufbau.

Bei einem bekannten, rotatorischen Elektromotor der eingangs genannten Art (EP-A-94978) ist zur Vermeidung der Notwendigkeit des gleichzeitigen Schaltens sämtlicher Elektromagnete vorgesehen, daß sich die Anzahl der Elektromagnete und der Dauermagnete voneinander unterscheidet. Es ergibt sich als Folge, daß entweder die Elektromagnete alle zu unterschiedlichen Zeiten geschaltet werden oder daß mehrere Elektromagnete symmetrisch über den Umfang des Elektromotors verteilt gleichzeitig geschaltet werden, die sich in analoger Relativlage zu gegenüberliegenden Dauermagnetpolen befinden. Benachbarte Elektromagnetpole werden jedoch überall zu unterschiedlichen Zeiten geschaltet.

Im Rahmen der Arbeiten an der vorliegenden Erfindung wurde jedoch festgestellt, daß das Schalten benachbarter Elektromagnete zu unterschiedlichen Zeiten Nachteile mit sich bringt. Das Schalten eines bestimmten Elektromagneten ohne das gleichzeitige Schalten der beiden benachbarten Elektromagneten bringt störende Rückwirkungen auf die beiden benachbarten Elektromagneten mit sich, weil sich das Schalten des betrachteten Elektromagneten über den jeweiligen magnetischen Kreis auf den jeweils benachbarten Elektromagneten auswirkt. Diese Erscheinung sei "Transformatorwirkung" genannt. Außerdem ergeben sich Rückwirkungen auf die den benachbarten Elektromagneten zugeordneten, elektronischen Schalteinrichtungen. Die Rückwirkungen der genannten Art äußern sich in einer verringerten Ausnützung des Elektromotors bzw. in einem verringerten Wirkungsgrad und in möglichen Überlastungen und damit Zerstörungen von Bauteilen der elektronischen Schalteinrichtungen.

Der Erfindung liegt die Aufgabe zugrunde, einen Elektromotor mit verringerten, störenden Rückwirkungen zwischen benachbarten Elektromagneten zu schaffen.

Erfindungsgemäß werden die benachbarten, einer gemeinsamen Elektromagnetgruppe angehörenden Elektromagnete als zu einer gleichen Phase gehörend in engem zeitlichem Zusammenhang, vorzugsweise gleichzeitig, geschaltet,
und werden die benachbarten Elektromagnetgruppen angehörenden Elektromagnete als zu unterschiedlichen Phasen gehörig zu unterschiedlichen Zeiten geschaltet.

Man erkennt, daß die Lehre der Erfindung dazu führt, daß diejenigen Stellen des Elektromotors, an denen mit Zeitunterschied zu schaltende Elektromagnete benachbart sind, in ihrer Anzahl verringert sind, weil sie nur noch an den Elektromagnetgruppengrenzen bzw. Elektromagnetgruppenübergängen vorhanden sind. Infolgedessen sind die geschilderten, störenden Rückwirkungen verringert.

In der vorliegenden Anmeldung ist der Begriff "Polabstand" so zu verstehen, daß er die in Richtung der Relativbewegung der Elektromagnetpole und der Dauermagnetpole gemessene Entfernung zwischen den Mitten der entsprechenden Magnetpole bezeichnet. Es versteht sich ferner, daß das jeweilige Einschalten der Elektromagnete durch die zugeordnete elektronische Schalteinrichtung mit der für die Antriebswirkung richtigen Stromrichtung erfolgt.

Um zu erreichen, daß benachbarte Elektromagnetgruppen unterschiedlichen Phasen angehören, wird vorzugsweise die geometrische Anordnung der Elektromagnetgruppen und/oder von Dauermagnetgruppen vorzugsweise so ausgelegt, daß sich das Erfordernis der Schaltung benachbarter Elektromagnetgruppen mit Zeitunterschied aufgrund der geometrischen Gestaltung des Elektromotors ergibt.

Die erste bevorzugte Möglichkeit ist dadurch gekennzeichnet, daß zur Phasenunterschiedsbildung benachbarter Elektromagnetgruppen der Elektromagnetpolabstand beim Übergang zwischen benachbarten Elektromagnetgruppen von dem Dauermagnetpolabstand abweicht. Die Auslegung ist vorzugsweise so getroffen, daß die Dauermagnetpolabstände beim gesamten Elektromotor gleich sind und daß beim Übergang bzw. an der Grenze zwischen benachbarten Elektromagnetgruppen dort der Elektromagnetpolabstand größer oder kleiner als dieser Dauermagnetpolabstand ist.

Die zweite bevorzugte Möglichkeit ist dadurch gekennzeichnet, daß zur Phasenunterschiedsbildung benachbarter Elektromagnetgruppen die Dauermagnete in Dauermagnetgruppen angeordnet sind, wobei der Dauermagnetpolabstand innerhalb der Dauermagnetgruppen dem Elektromagnetpolabstand entspricht und der Dauermagnetpolabstand beim Übergang zwischen benachbarten Dauermagnetpolgruppen von dem Elektromagnetabstand abweicht. Die Auslegung ist vorzugsweise so getroffen, daß sämtliche Elektromagnete des Elektromotors einen gleichen Polabstand voneinander aufweisen, während hinsichtlich der Dauermagnete lediglich die Polabstände innerhalb der Dauermagnetgruppen untereinander und zu diesem Elektromagnetpolabstand gleich sind und beim Übergang bzw. an der Grenze zwischen benachbarten Dauermagnetgruppen ein größerer oder ein kleinerer Dauermagnetpolabstand vorgesehen ist.

In bevorzugter Weiterbildung der Erfindung ist vorgesehen, daß die Elektromagnete innerhalb der Elektromagnetgruppen mit gleichem Elektromagnetpolabstand angeordnet sind. Wenn dieser Elektromagnetpolabstand einem überall gleichen Dauermagnetpolabstand entspricht, ergibt sich die vollständigste Ausnutzung des Elektromotors. Andererseits kann es jedoch zur weiteren Vergleichmäßigung des Motorlaufs und/oder zur günstigen Modifizierung der im Elektromotor induzierten Gegenspannung von Vorteil sein, den Elektromagnetpolabstand innerhalb der Elektromagnetgruppen geringfügig zu variieren, so daß die Elektromagnete zumindest zum Teil geringfügig früher oder geringfügig später als genau der geometrischen, Relativstellung zu gegenüberliegenden Dauermagneten entspricht, geschaltet werden. Eine derartige Variation in den Polabständen kann aucn bei den Dauermagnetpolen vorgenommen sein. Derartige Variationen kommen auch bei den bevorzugten Weiterbildungen, wie sie vorstehend beschrieben worden sind, in Betracht, wobei man dort, wo von sich entsprechenden Polabständen gesprochen ist, statt dessen eine Entsprechung von gemittelten Polabständen vorsehen müßte.

Da die einer gemeinsamen Elektromagnetgruppe angehörenden Elektromagnete vorzugsweise gleichzeitig geschaltet werden, ist es vorzugsweise möglich, pro Elektromagnetgruppe mit einer gemeinsamen elektronischen Schalteinrichtung zu arbeiten. Es kann bei bestimmten Auslegungsfällen aber auch günstig sein, die Schaltleistung auf mehrere elektronische Unter-Schalteinrichtungen aufzuteilen, die beispielsweise von einer gemeinsamen Sensoreinrichtung zur Erfassung der Relativstellung der Elektromagnetgruppe zu den Dauermagneten gesteuert werden. Mit abnehmender Schaltleistung sinkt nämlich der Preis der elektronischen Unter-Schalteinrichtungen überproportional. Außerdem ergibt sich dadurch eine erhöhte Sicherung gegen Totalausfall des Elektromotors.

Das Vorsehen von Elektromagnetpolen ohne Bewicklung an den Elektromagnetgruppenenden ist besonders günstig, wenn verringerte Elektromagnetpolabstände zwischen den Elektromagnetpolgruppen vorhanden sind. Dies trägt den beengten Platzverhältnissen gerade an diesen Stellen Rechnung.

Ganz generell kann man günstigerweise die Bereiche an den Elektromagnetgruppenenden zur Befestigung oder zusätzlichen Befestigung der Elektromagnete der jeweiligen Gruppe am Stator oder am Läufer nutzen. Besonders günstig entsteht hier mehr Raum, wenn an den Enden der Elektromagnetgruppen der Elektromagnetpolabstand vergrößert ist.

In bevorzugter Weiterbildung der Erfindung ist am Übergang zwischen benachbarten Elektromagnetgruppen der elektromagnetische Eisenkreis getrennt. Auf diese Weise kann man die eingangs geschilderten, nachteiligen Rückwirkungen benachbarter, zu unterschiedlichen Zeiten zu schaltender Elektromagnete auch an diesen Stellen wirksam unterbinden.

Weitere bevorzugte Merkmale, die beim erfindungsgemäßen Elektromotor verwirklicht sein können, ergeben sich aus der EP-A-94 978.

Nach der Lehre der Erfindung können nicht nur Elektromotoren, sondern in ganz analoger Weise auch Elektrogeneratoren aufgebaut werden, so daß sich die Ansprüche und die Beschreibung der vorliegenden Anmeldung in analoger Weise auch auf Generatoren beziehen.

Die Erfindung und Weiterbildungen der Erfindung werden im folgenden anhand mehrerer, teilweise schematisch dargestellter Ausführungsbeispiele noch näher erläutert. Es zeigen:
- Fig. 1: einen Querschnitt eines
ersten Elektromotors der zwar nicht patent- gemäß ausgebildet ist, aber zur Erläuterung des grundsätzlichen Motoraufbaus nützlich ist.
- Fig. 2: ein Diagram, des zeitlichen Verlaufs der Sensorsignale für die einzelnen Elektromagnetgruppen;
- Fig. 3: eine Abwicklung eines Teils eines zweiten Elektromotors;
- Fig. 4 und Fig. 5: Seitenansichten mehrerer Konfigurationen des Elektromagnetgruppenübergangs.

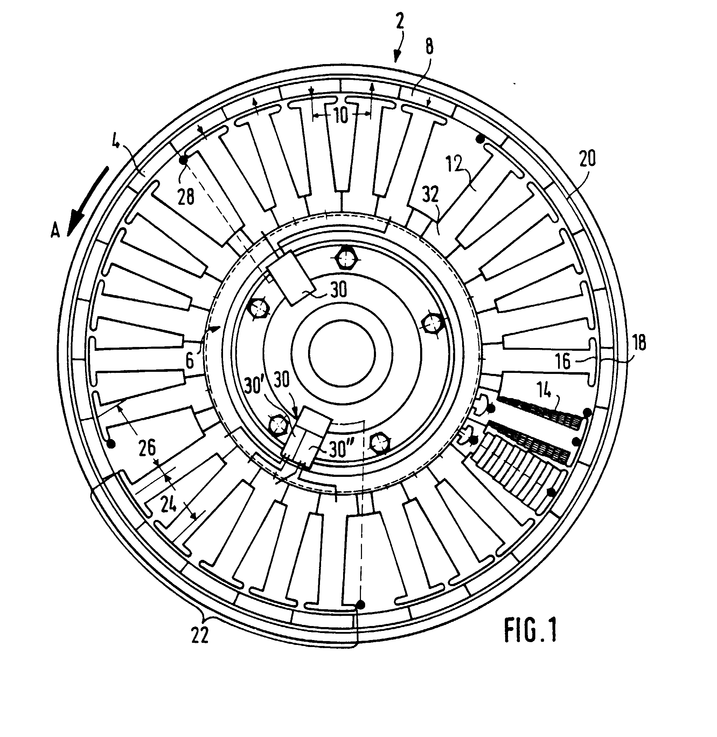

Der in Fig. 1 dargestellte Elektromotor 2 besitzt einen im wesentlichen hohlzylindrischen Läufer 4 und einen in dessen Innerem angeordneten Stator 6. Am Innenumfang des Läufers 4 sind ringförmig in abwechselnder Polung 28 Dauermagnete 8 mit untereinander gleichem Dauermagnetpolabstand 10 befestigt. Auf dem Stator 6 sind insgesamt 25 sich radial erstreckende Elektromagnete 12 befestigt, wobei nur an zwei Stellen die bei allen Elektromagneten 12 vorhandenen Wicklungen 14 eingezeichnet sind. Die radial äußere Fläche jedes Elektromagneten 12 stellt einen Elektromagnetpol 16 dar, während die radial innere Begrenzungsfläche jedes Dauermagneten 8 eine Dauermagnetpolfläche 18 darstellt. Die Elektromagnetpolflächen 16 und die Dauermagnetpolflächen 18 haben in Radialrichtung einen Luftspalt voneinander. Radial außen von der kreisförmigen Reihe der Dauermagnete 8 befindet sich ein zylindrisches, magnetisch leitendes Teil 20 als magnetischer Rückschlußweg für die außen liegenden Rückseiten der Dauermagnete 8.

Jeweils fünf Elektromagnete 12 sind als Elektromagnetgruppe 22 zusammengefaßt, wobei innerhalb dieser Gruppe 22 die Elektromagnetpolabstände 24 untereinander gleich und den Dauermagnetpolabständen 10 gleich sind. Am Übergang von jeder Elektromagnetgruppe 22 zur benachbarten Elektromagnetgruppe 22 beträgt der Gruppengrenzen-Elektromagnetpolabstand 26 das 1,6-fache des Elektromagnetpolabstands 24 innerhalb der Elektromagnetgruppen 22. Die Dauermagnete 8 stoßen in Umfangsrichtung unmittelbar aneinander.

In jeder Elektromagnetgruppe 22 ist ein Elektromagnetpol 16 am in Umfangsrichtung linken oder rechten Ende mit einem Sensor 28 versehen, der vorzugsweise als Hall-Sensor ausgebildet ist. Jeder Sensor 28 erzeugt beispielsweise ein Signal, wenn er einem Dauermagnet-Nordpol gegenübersteht, und kein Signal, wenn er einem Dauermagnet-Südpol gegenübersteht. Der Signalzustand jedes Sensors 28 wird elektrisch an eine elektronische Schalteinrichtung 30 gegeben, wobei pro Elektromagnetgruppe 22 eine Schalteinrichtung 30 vorgesehen ist und aus Vereinfachungsgründen nur zwei Schalteinrichtungen 30 eingezeichnet sind. Wenn ein Signal des Sensors 28 einer Elektromagnetgruppe 22 vorliegt, sorgt die Schalteinrichtung 30 dieser Gruppe 22 dafür, daß alle fünf Elektromagnete 12 dieser Gruppe 22 strombeaufschlagt sind, wobei die elektrische Verbindung der Wicklungen 14 untereinander oder mit der Schalteinrichtung 30 so vorgenommen ist, daß benachbarte Elektromagnete 12 dieser Gruppe 22 mit gegensinniger Stromrichtung durchflossen werden. Wenn der Sensor 28 dieser Gruppe 22 kein Signal liefert, sorgt die Schalteinrichtung 30 dafür, daß alle Elektromagnete 12 dieser Gruppe 22 in entgegengesetzter Stromrichtung wie bisher stromdurchflossen sind. Der Sensor 28 und die Schalteinrichtung 30 sorgen also dafür, daß alle Elektromagnete 12 der betrachteten Gruppe 22 in ihrer Stromrichtung umgeschaltet werden, wenn sich die fünf Elektromagnetpole 16 gerade zentral gegenüber fünf Dauermagnetpolen 18 befinden.

Wegen des größeren Gruppengrenzen-Elektromagnetpolabstands 26 wird die jeweils benachbarte Elektromagnetgruppe 22 später umgeschaltet, so daß innerhalb der Zeit, die der Läufer 4 für eine Weiterdrehung um einen Dauermagnetpolabstand 10 benötigt, sämtliche fünf Elektromagnetgruppen 22 umgeschaltet werden. Danach beginnt der Umschaltrythmus wieder mit der Umschaltung der ersten Elektromagnetgruppe 22.

Im unteren Teil der Fig. 1 ist angedeutet, daß die Schalteinrichtung 30 auch in zwei Unter-Schalteinrichtungen 30' und 30" aufgeteilt sein kann, wobei jede Unter-Schalteinrichtung nur einen Teil der Elektromagnete 12 der jeweiligen Gruppe 22 schaltet. Man kann auch pro Elektromagnet 12 eine eigene Unter-Schalteinrichtung vorsehen. Die einzelnen Unter-Schalteinrichtungen werden gemeinsam durch den Sensor 28 dieser Gruppe 22 angesteuert. Auf diese Weise ist die Schaltleistung jeder Unter-Schalteinrichtung kleiner als die Gesamtschaltleistung einer gemeinsamen Schalteinrichtung 30 sein müßte.

Die einzelnen Elektromagnete 12 besitzen radial innen Füße 32, die in Umfangsrichtung vergrößert sind. Innerhalb jeder Elektromagnetgruppe 22 stoßen diese Füße 32 in Umfangsrichtung aneinander, wodurch dort der magnetische Kreis geschlossen wird. An der Grenze jeder Gruppe 22 zur benachbarten Gruppe 22 stoßen die Füße 32 nicht aneinander, so daß dort eine Trennung des magnetischen Kreises vorhanden ist.

Es versteht sich, daß der Läufer 4 vor und/oder hinter der Zeichenebene der Fig. 1 gelagert ist, wobei der Läufer durch Stirnwände näher zum Zentrum der Rotationsbewegung geführt und auf kleinerem Durchmesser gelagert sein kann.

Das mit den Dauermagneten 8 versehene, radial äußere Teil des Elektromotors 2 könnte auch als stillstehender Stator dienen, und es könnte sich das innerhalb angeordnete, mit den Elektromagneten versehene Teil drehen. Es könnten auch die Elektromagnete 12 radial nach innen ragend an dem zylindrischen, äußeren Teil des Elektromotors 2 befestigt sein, während die Dauermagnete 8 außen am radial inneren Teil des Elektromotors 2 befestigt sind.

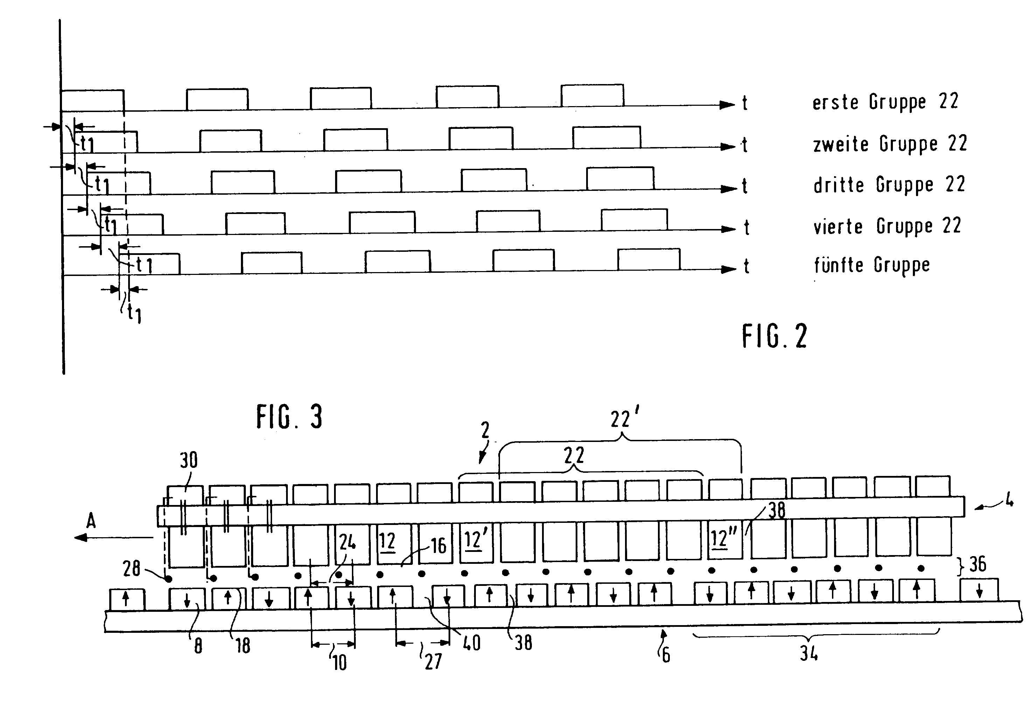

Fig. 2 veranschaulicht die zeitliche Lage der Signale der Sensoren 28 der einzelnen Elektromagnetgruppen 22. In waagerechter Richtung ist die Zeit aufgetragen. Die rechteckigen Kästchen auf den fünf waagerechten Linien bedeuten diejenigen Zeitabschnitte, in denen der jeweilige Sensor 28 ein Signal liefert, weil er sich gegenüber einem Dauermagnetnordpol befindet. Die zwischen diesen Kästchen liegenden Abschnitte bedeuten diejenigen Zeitabschnitte, in denen der jeweilige Sensor 28 kein Signal liefert, weil er sich einem Dauermagnetsüdpol gegenüber befindet. Am Anfang und am Ende jedes Kästchens werden alle fünf Elektromagnete 12 der von dem jeweiligen Sensor 28 gesteuerten Elektromagnetgruppe 22 umgeschaltet.

Man erkennt in Fig. 2 besonders anschaulich, daß nach einer Zeit t₁, die dem Weiterdrehen des Läufers 4 um das 0,6-fache eines Dauermagnetpolabstands 10 entspricht, die jeweils anschließend benachbarte Elektromagnetgruppe 22 umgeschaltet wird.

Statt, wie anhand von Fig. 1 beschrieben, einen Elektromagneten 12 jeder Gruppe 22 mit einem einzigen Sensor 28 auszustatten, kann man auch an einem Elektromagnetpol 16 an dessen in Fig. 1 linker Kante einen ersten Sensor und an dessen in Fig. 1 rechter Kante einen zweiten Sensor befestigen. Der erste Sensor spricht auf magnetische Nordpole, und der zweite Sensor auf magnetische Südpole an. Wenn sich der erste Sensor einem magnetischen Nordpol und der zweite Sensor einen magnetischen Südpol gegenüber befindet, wird ein Signal erzeugt. Wenn sich der erste Sensor gegenüber einem magnetischen Südpol und der zweite Sensor gegenüber einem magnetischen Nordpol befindet, wird kein Signal erzeugt. Die Arbeitsweise der Schalteinrichtung 30 bleibt so, wie weiter oben beschrieben.

Eine weitere Möglichkeit besteht darin, die Elektromagnetpole 16 in Umfangsrichtung etwas kürzer als die Dauermagnetpole 18 zu machen (wie auch in Fig. 1 angedeutet) und die Elektromagnete 12 nicht nur hinsichtlich der Stromdurchflußrichtung umzuschalten, sondern nach einem Zeitintervall mit einer ersten Stromdurchflußrichtung kurzzeitig auszuschalten, dann für die entgegengesetzte, zweite Stromdurchflußrichtung einzuschalten, dann wieder kurzzeitig auszuschalten usw. Auf diese Weise können Stromdurchfluß-Zeitintervalle, die relativ wenig zum erzeugten Drehmoment beitragen, eliminiert werden.

Fig. 3 zeigt die Abwicklung eines Teils eines Elektromotors 2 mit einem Stator 6 und einem Läufer 4. Der Läufer 4 bewegt sich mit einer Relativbewegungsrichtung A relativ zum Stator 6. Auf der Oberseite des Stators 6 sind Dauermagnete 8 mit Dauermagnetpolflächen 18 in längs des Stators abwechselnder Polung befestigt. Die Dauermagnete sind in Dauermagnetgruppen 34 aus jeweils sechs Dauermagneten 8 angeordnet. Innerhalb der Dauermagnetgruppen 34 sind die Dauermagnetpolabstände 10 untereinander gleich;am Übergang bzw. an der Grenze zwischen benachbarten Gruppen 34 ist der Gruppengrenzen-Dauermagnetabstand 27 etwas größer.

An der Unterseite des Läufers 4 ist eine Reihe von Elektromagneten 12 mit Elektromagnetpolflächen 16 angeordnet. Zwischen den Dauermagnetpolflächen 18 und den Elektromagnetpolflächen 16 besteht ein Luftspalt 36. Die Elektromagnete 12 sind mit überall gleichem Elektromagnetpolabstand 24 angeordnet, der dem Dauermagnetpolabstand 10 gleich ist. In Relativbewegungsrichtung A weisen sowohl die Dauermagnete 8 innerhalb der Dauermagnetgruppen 34 als auch die Elektromagnete 12 kleine Lücken 38 zwischen sich auf. Jeder Elektromagnet 12 ist mit einem Sensor, vorzugsweise ausgebildet als Hall-Sensor, an seiner Vorderkante oder seiner Hinterkante, gesehen in Relativbewegungsrichtung A, ausgerüstet. Außerdem ist für jeden Elektromagneten 12 eine elektronische Schalteinrichtung 30 vorgesehen. Die Sensoren 28 sprechen, wie beim Ausführungsbeispiel gemäß Fig. 1, auf die Magnetfelder der gegenüberliegenden Dauermagnete 8 an. Die elektrische Verbindung zwischen dem jeweiligen Sensor 28 und der jeweiligen Schalteinrichtung 30 ist im Fall von drei Elektromagneten 12 eingezeichnet, sonst weggelassen. Wenn beispielsweise der Sensor 28 eines Elektromagneten 12 die in Relativbewegungsrichtung A gesehen, erste Kante eines Dauermagneten 8 erreicht, wird der entsprechende Elektromagnet 12 umgeschaltet. Dieser Zustand ist in Fig. 3 gerade für diejenigen sechs Elektromagnete 12 erreicht, die als Elektromagnetgruppe 22 herausgehoben ist. Wenn sich diese Elektromagnetgruppe um einen Dauermagnetpolabstand 10 weiterbewegt, wird der in Relativbewegungsrichtung A vorderste Elektromagnet 12' nicht sofort umgeschaltet, weil sein Sensor 28 oberhalb einer Gruppengrenzenlücke 40 steht. Die sich an den Elektromagneten 12' anschließenden sechs Elektromagnete 12 werden jedoch umgeschaltet, wobei es sich bei diesen sechs Elektromagneten 12 um die restlichen fünf der vorher betrachteten Elektromagnetgruppe 22 und einen hinten daran anschließenden Elektromagneten 12" handelt. Auf diese Weise wird also wiederum eine aus sechs Elektromagneten 12 bestehende Elektromagnetgruppe 22' gebildet, die jedoch nicht die gleichen Elektromagnete 12 wie zuvor umfaßt. Die sich einer Dauermagnetgruppe 34 in gleicher Relativlage gegenüberliegenden sechs Dauermagnete 12 bilden also in immer wieder wechselnder Zusammensetzung eine Elektromagnetgruppe 22, deren einzelnen Elektromagnete 12 gleichzeitig umgeschaltet werden. - Vor der vorstehend betrachteten Elektromagnetgruppe 22 und hinter der vorstehend betrachteten Elektromagnetgruppe 22 befinden sich ebenfalls Elektromagnetgruppen, die dann gleichzeitig geschaltet werden, wenn sie in eine entsprechende Relativlage zu Dauermagnetgruppen 34 kommen, die vor oder hinter der vorstehend betrachteten Dauermagnetgruppe 34 liegen. Wegen des größeren Gruppengrenzen-Dauermagnetabstands 26 werden diese Zustände mit Zeitunterschieden zu dem vorstehend betrachteten Schaltzeitpunkt erreicht. Es ergibt sich also eine Schaltabfolge, die ähnlich wie beim Ausführungsbeispiel gemäß Fig. 1 ist, wobei jedoch die Elektromagnetgruppenzusammensetzung sich laufend ändert und der Elektromotor 2 noch stoßfreier läuft als beim Ausführungsbeispiel gemäß Fig. 1. Der Gruppengrenzen-Dauermagnetabstand 26 beträgt das 1,33-fache des Dauermagnetabstands 10 innerhalb der Dauermagnetgruppen 34, so daß sich das Bild der Relativzuordnung der Dauermagnete 8 und der Elektromagnete 12 nach drei Dauermagnetgruppen 34 wiederholt.

Die Ausführungen zum Ausführungsbeispiel gemäß Fig. 1 hinsichtlich weiterer Möglichkeiten der Sensoranordnung und des kurzzeitigen Abschaltens von Elektromagneten 12 gelten entsprechend auch für das Ausführungsbeispiel gemäß Fig. 3.

Man kann die Dauermagnete 8 auch am Läufer 4 anbringen und die Elektromagnete 12 am Stator 6.

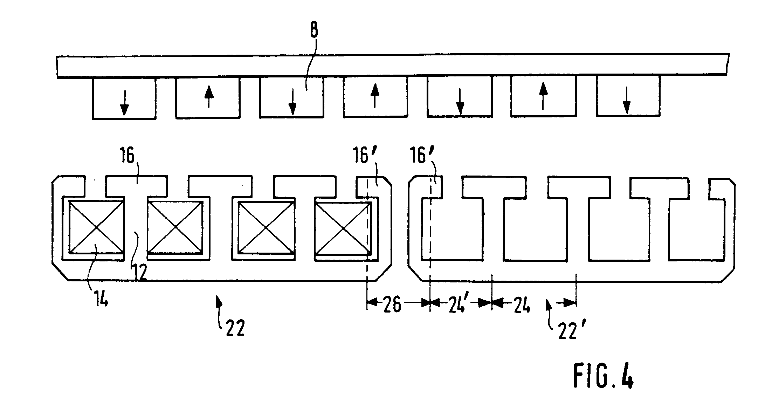

Fig. 4 zeigt unterhalb einer Reihe von mit gleichem Dauermagnetpolabstand in wechselnder Polung angeordneten Dauermagneten 8 die Gestaltung der Konfiguration der Elektromagnete 12 an der Grenze bzw. am Übergang zwischen zwei Elektromagnetgruppen 22. Die rechte Elektromagnetgruppe 22' ist stärker an die linke Elektromagnetgruppe 22 herangerückt, so daß sich ein Gruppengrenzen-Elektromagnetpolabstand 26 ergibt, der kleiner als der Elektromagnetpolabstand 24 innerhalb der Gruppen 22 ist. Jede Elektromagnetgruppe 22 bzw. 22' weist fünf Elektromagnetpole 16 auf. Man kann sich diese Konfiguration am einfachsten dadurch entstanden denken, daß ausgehend von einer durchgehend identischen Elektromagnetanordnung ein Elektromagnetpol 16 in seiner Mitte rechtwinklig zur Erstreckungsrichtung der Reihe der Elektromagnete 12 aufgeschnitten worden ist und daß an dieser Schnittstelle die entstandenen Halb-Elektromagnetpole 16' auseinandergerückt worden sind, wodurch an dieser Auseinanderrückstelle ein Gruppengrenzen-Elektromagnetpolabstand 26 entsteht, der kleiner oder größer als der "normale" Elektromagnetpolabstand 24 ist. Ferner sieht man die Besonderheit, daß bei jeder Elektromagnetpolgruppe 22 bzw. 22' - in Elektromagnetreihenrichtung fortschreitend gesehen - nur der zweite und der vierte Elektromagnetpol 16 eine Wicklung 14 trägt, während der erste, dritte und fünfte Elektromagnetpol unbewickelt sind. Am Fuß jedes bewickelten Elektromagnetpols 16 teilt sich der magnetische Fluß nach links und nach rechts. Da infolgedessen der erste und der letzte Elektromagnetpol nur jeweils mit dem halben magnetischen Fluß durchsetzt sind, können sie mit etwa halber Querschnittsgröße und etwa halber Polfläche ausgebildet sein, weshalb der Begriff "Halbpol" 16' berechtigt ist. Man erkennt außerdem, daß der Polabstand zwischen dem jeweiligen Halbpol 16' und dem benachbarten Elektromagnetpol 16, nämlich der Polabstand 24', etwas kleiner als der "normale", Elektromagnetpolabstand 24 ist. Auch derartige Varianten gehören zum Bereich der Erfindung.

Es wird ferner ausdrücklich darauf hingewiesen, daß Elektromagnetgruppen 22 bzw. 22' statt mit fünf Elektromagnet polen 16 bzw. 16' auch mit drei Elektromagnetpolen gestaltet werden können, nämlich einem zentralen Elektromagnetpol 16 und zwei Halbpolen 16', wie bei der Fig. 4 für eine größere Elektromagnetpolanzahl gezeichnet. Bei derartigen Gruppen aus drei Elektromagnetpolen trägt nur der mittlere Elektromagnetpol 16 eine Wicklung 14. Diese "Dreiergruppenkonfiguration" ist in Weiterbildung der Erfindung sogar besonders bevorzugt.

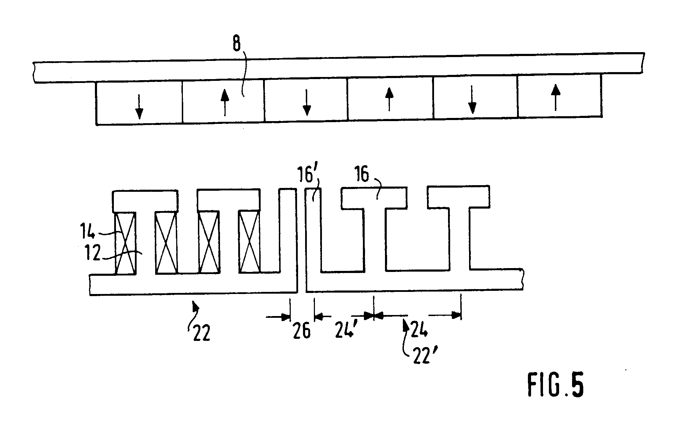

Fig. 5 zeigt unterhalb einer Reihe von mit gleichem Dauermagnetpolabstand in wechselnder Polung angeordneten Dauermagneten 8 die Gestaltung der Konfiguration der Elektromagnete 12 an der Grenze bzw. am Übergang zwischen zwei Elektromagnetgruppen 22 und 22'. Der Gruppengrenzen-Elektromagnetpolabstand 26 ist kleiner als der normale Elektromagnetpolabstand 24. Auch hier erkennt man wiederum unbewickelte Halbpole 16' an der Gruppengrenze und einen etwas verkleinerten Elektromagnetpolabstand 24' zwischen dem Rand-Elektromagnetpol 16' und dem benachbarten Elektromagnetpol 16 der betreffenden Gruppe 22.

Bei allen Ausführungsbeispielen der Fig. 4 und 5 sind jeweils nur bei den Elektromagneten 12 der linken Elektromagnetgruppe 22 die Wicklungen 14 eingezeichnet; bei der rechten Gruppe 22' wurden sie aus Vereinfachungsgründen weggelassen. Die vorgesehenen, unbewickelten Schenkel dienen der besseren Ausnutzung des Magnetflusses auch im Bereich der Gruppengrenze, wobei die Polkopfausbildung vom vorhandenen Platz und von einer möglichst guten Anpassung an den zu führenden magnetischen Fluß bestimmt ist.

Die Ausbildung der beschriebenen, elektronischen Schalteinrichtungen 30 mußte nicht im einzelnen näher erläutert werden, da der Fachmann derartige Schalteinrichtungen kennt oder aufgrund seines Fachwissens ohne Schwierigkeiten erstellen kann. Besonders bevorzugt sind Vierquadrantensteller als Schalteinrichtung, und ein konkretes Beispiel eines geeigneten Vierquadrantenstellers ergibt sich aus der EP-A-94 978.

Es wird ausdrücklich darauf hingewiesen, daß in bevorzugter Ausgestaltung der Erfindung Dauermagnete mit einer Permeabilitätszahl, die in der Größenordnung der Permeabilität von Luft (µ = 1) liegt, eingesetzt werden. Beim Betrieb eines Elektromotors haben nämlich üblicherweise die Elektromagnetfelder schwächende Rückwirkungen auf den Erregerteil des Elektromotors, wobei die Größe dieser Rückwirkung vom magnetischen Widerstand in den einzelnen magnetischen Kreisen zwischen dem Stator und dem Läufer abhängen. Bei der geschilderten Ausgestaltung der Erfindung haben jedoch die einzelnen magnetischen Kreise auch bei geringer Dicke des Luftspaltes einen hohen magnetischen Widerstand aufgrund der im Vergleich zu Eisen um einige Größenordnungen niedrigeren Permeabilitätszahl der Dauermagnete. Infolgedessen verringert sich die geschilderte, schwächende Rückwirkung entscheidend. Außerdem sinkt die Induktivität der zu schaltenden Elektromagnete wesentlich, so daß an mit hoher Schaltgeschwindigkeit der Elektromagnetpole arbeiten kann. Besonders bevorzugt sind Dauermagnete aus einem Werkstoff auf der Basis seltener Erden mit Kobalt, insbesondere Samarium-Kobalt-Dauermagnete.

## Patentansprüche

1. Rotatorischer Elektromotor (2), mit:
(a) einem Statorpole (16, 16') aufweisenden Stator (6) und einem Läuferpole (18) aufweisenden Läufer (4), wobei für die Statorpole (16, 16') oder für die Läuferpole (18) Dauermagnete (8) und für die jeweils anderen Pole Elektromagnete (12) vorgesehen sind;
(b) elektronischen Schalteinrichtungen (30) zum Schalten von Elektromagneten (12) jeweils entsprechend der Elektromagnet-Dauermagnet-Relativstellung;
(c) und einer Anordnung der Dauermagnete (8) und der Elektromagnete (12) derart, daß jeweils nur ein Teil der Elektromagnete (12) des Elektromotors gleichzeitig zu schalten ist,
**dadurch gekennzeichnet**,
(d) daß jeweils mehrere benachbarte Elektromagnetpole (16, 16') eine zu einer Phase gehörende Elektromagnetpolgruppe (22) bilden, die mit einer gegenüberliegenden Dauermagnetanzahl zusammenwirkt;
(e) daß benachbarte Elektromagnetpolgruppen (22) unterschiedlichen Phasen angehören;
(f) und daß die Elektromagnetpolgruppen (22) jeweils eine ungerade Anzahl von Elektromagnetpolen (16, 16') aufweisen, wobei die Rand-Elektromagnetpole (16') unbewickelt sind und bewickelte und unbewickelte Elektromagnetpole (16, 16') miteinander abwechseln.

2. Elektromotor nach Anspruch 1,
**dadurch gekennzeichnet**,
daß die Rand-Elektromagnetpole (16') als Halbpole ausgebildet sind, die im Vergleich zu den anderen Elektromagnetpolen (16) etwa den halben Magnetflußquerschnitt besitzen.

3. Elektromotor nach Anspruch 1 oder 2,
**dadurch gekennzeichnet**,
daß die Elektromagnetpole (16, 16') innerhalb der Elektromagnetpolgruppen (22) mit gleichem Elektromagnetpolabstand (24) angeordnet sind.

4. Elektromotor nach Anspruch 1 oder 2,
**dadurch gekennzeichnet**,
daß die Elektromagnetpole (16, 16') innerhalb der Elektromagnetpolgruppen (22) mit geringfügig variierendem Elektromagnetpolabstand (24) angeordnet sind.

5. Elektromotor nach Anspruch 1 oder 2,
**dadurch gekennzeichnet**,
daß bei einer Elektromagnetpolgruppe (22) zwischen einem Rand-Elektromagnetpol (16') und dem benachbarten Elektromagnetpol (16) der Elektromagnetpolgruppe (22) ein etwas verkleinerter Elektromagnetpolabstand (24') besteht.

6. Elektromotor nach einem der Ansprüche 1 bis 5,
**dadurch gekennzeichnet**,
daß pro Elektromagnetpolgruppe (22) eine gemeinsame elektronische Schalteinrichtung (30) oder mehrere elektronische Unter-Schalteinrichtungen (30', 30"), die vorzugsweise von einer gemeinsamen Sensoreinrichtung (28) zur Erfassung der Relativstellung der Elektromagnetpolgruppe (22) zu den Dauermagneten (8) gesteuert werden, vorgesehen sind.

7. Elektromotor nach einem der Ansprüche 1 bis 6,
**dadurch gekennzeichnet**,
daß am Übergang zwischen benachbarten Elektromagnetpolgruppen (22) der elektromagnetische Eisenkreis getrennt ist.

8. Elektromotor nach einem der Ansprüche 1 bis 7,
**dadurch gekennzeichnet**,
daß die Bereiche an den Elektromagnetpolgruppenenden zur Befestigung oder zusätzlichen Befestigung der Elektromagnete (12) der jeweiligen Elektromagnetpolgruppe (22) am Stator (6) oder am Läufer (4) genutzt sind.

9. Elektromotor nach einem der Ansprüche 1 bis 8,
**dadurch gekennzeichnet**,
daß Dauermagnete (8) mit einer Permeabilität, die in der Größenordnung der Permeabilität von Luft (µ = 1) liegt, vorgesehen sind.

10. Elektromotor nach Anspruch 9,
**dadurch gekennzeichnet**,
daß Dauermagnete (8) aus einem Werkstoff auf der Basis seltener Erden mit Kobalt vorgesehen sind.

## Claims

1. A rotary electric motor (2) comprising:
(a) a stator (6) having stator poles (16, 16') and a rotor (4) having rotor poles (18), with permanent magnets (8) being provided for the stator poles (16, 16') or for the rotor poles (18) and electromagnets (12) being provided for the respective other poles;
(b) electronic switching means (30) for switching electromagnets (12) in accordance with the particular relative position of electromagnets/permanent magnets;
(c) an arrangement of permanent magnets (8) and electromagnets (12) such that each time only part of the electromagnets (12) of the electric motor is to be switched simultaneously,
characterized in
(d) that a plurality of adjacent electromagnet poles (16, 16') each form an electromagnet pole group (22) belonging to one phase, which cooperates with a number of opposite permanent magnets;
(e) that adjacent electromagnet pole groups (22) belong to different phases;
(f) and in that the electromagnet pole groups (22) each have an odd number of electromagnet poles (16, 16'), with the edge electromagnet poles (16') being without winding, and electromagnet poles (16, 16') with winding and without winding being provided in alternating manner.

2. An electric motor according to claim 1,
characterized in that the edge electromagnet poles (16') are in the form of half-poles having approximately half of the magnetic flux cross-section as compared to the other electromagnet poles (16).

3. An electric motor according to claim 1 or 2,
characterized in that the electromagnet poles (16, 16') within the electromagnet pole groups (22) are disposed with the same electromagnet pole spacing (24).

4. An electric motor according to claim 1 or 2,
characterized in that the electromagnet poles (16, 16') within the electromagnet pole groups (22) are disposed with a slightly varying electromagnet pole spacing (24).

5. An electric motor according to claim 1 or 2,
characterized in that a somewhat reduced electromagnet pole distance (24') is present in one of the electromagnet pole groups (22) between an edge electromagnet pole (16') and the adjacent electromagnet pole (16) of the electromagnet pole group (22).

6. An electric motor according to any one of claims 1 to 5,
characterized in that, for each electromagnet pole group (22), there is provided a common electronic switching means (30) or a plurality of electronic subswitching means (30', 30") which are preferably controlled by a common sensor means (28) for detecting the relative position of the electromagnet pole group (22) to the permanent magnets (8).

7. An electric motor according to any one of claims 1 to 6,
characterized in that the electromagnetic iron circuit is separated at the transition between adjacent electromagnet pole groups (22).

8. An electric motor according to any one of claims 1 to 7,
characterized in that the portions on the electromagnet pole group ends are utilized for attaching or additionally attaching the electromagnets (12) of the respective electromagnet pole group (22) to the stator (6) or to the rotor (4).

9. An electric motor according to any one of claims 1 to 8,
characterized in that permanent magnets (8) are provided having a permeability that is in the order of magnitude of the permeability of air (µ = 1).

10. An electric motor according to claim 9,
characterized in that permanent magnets (8) are provided which are made of a material on the basis of the rare earths with cobalt.

## Revendications

1. Moteur électrique rotatif (2) comprenant :
(a) un stator (6) présentant des pôles de stator (16, 16') et un rotor (4) présentant des pôles de rotor (18), les pôles de stator (16, 16') ou les pôles de rotor (18) étant pourvus d'aimants permanents (8) et les autres pôles étant pourvus d'électroaimants (12);
(b) des moyens de commutation électroniques (30) pour la commutation des électroaimants (12) en fonction chaque fois de la position relative des électroaimants et des aimants permanents;
(c) et une disposition des aimants permanents (8) et des électroaimants (12) telle qu'à chaque fois seule une partie des électroaimants (12) du moteur électrique soient à commuter simultanément,
caractérisé en ce que
(d) plusieurs pôles d'électroaimants (16, 16') forment à chaque fois un groupe d'électroaimants appartenant à une phase (22) qui coopère avec un certain nombre d'aimants permanents opposés;
(e) des groupes de pôles d'électroaimants voisins (22) appartiennent à des phases différentes;
(f) et les groupes de pôles d'électroaimants (22) présentent à chaque fois un nombre impair de pôles d'électroaimants (16, 16'), les pôles d'électroaimants des bords (16') étant non bobinés et les pôles d'électroaimants bobinés et non bobinés (16, 16') alternant.

2. Moteur électrique selon la revendication 1,
caractérisé en ce que
les pôles d'électroaimants des bords (16') sont des demi-pôles qui possèdent une section de flux magnétique environ moitié de celle des autres pôles d'électroaimants (16).

3. Moteur électrique selon la revendication 1 ou 2,
caractérisé en ce que
les pôles d'électroaimants (16, 16') sont disposés à l'intérieur des groupes de pôles d'électroaimants (22) avec le même écartement de pôles d'électroaimants (24).

4. Moteur électrique selon la revendication 1 ou 2,
caractérisé en ce que
les pôles d'électroaimants (16, 16') sont disposés à l'intérieur des groupes de pôles d'électroaimants (22) avec un écartement de pôles d'électroaimants (24) variant légèrement.

5. Moteur électrique selon la revendication 1 ou 2,
caractérisé en ce que
dans un groupe d'électroaimants (22) il y a un écartement de pôles d'électroaimants (24') quelque peu réduit entre un pôle d'électroaimant de bord (16') et le pôle d'électroaimant voisin (16) du groupe de pôles d'électroaimants (22).

6. Moteur électrique selon l'une quelconque des revendications 1 à 5,
caractérisé en ce
qu'il y a par groupe de pôles d'électroaimants (22) un moyen de commutation électronique commun (30) ou plusieurs sous-moyens de commutation électronique (30', 30") qui sont de préférence commandés par un moyen de capteur commun (28) servant à détecter la position relative du groupe de pôles d'électroaimants (22) par rapport aux aimants permanents (8).

7. Moteur électrique selon l'une quelconque des revendications 1 à 6,
caractérisé en ce que
le circuit électromagnétique est interrompu à la transition entre des groupes de pôles d'électroaimants voisins (22).

8. Moteur électrique selon l'une quelconque des revendications 1 à 7,
caractérisé en ce que
les zones d'extrémité de groupes de pôles d'électroaimants sont utilisées pour la fixation ou pour la fixation supplémentaire des électroaimants (12) du groupe de pôles d'électroaimants respectif (22) au stator (6) ou au rotor (4).

9. Moteur électrique selon l'une quelconque des revendications 1 à 8,
caractérisé en ce que
les aimants permanents (8) présentent une perméabilité du même ordre de grandeur que la perméabilité de l'air (µ=1).

10. Moteur électrique selon la revendication 9,
caractérisé en ce que
les aimants permanents (8) sont en un matériau à base de terres rares avec du cobalt.
